# DEMANDE DE BREVET EUROPEEN

(11) **EP 1 552 874 A1**
(43) Date de publication de la demande: **13.07.2005**
(21) Numéro de dépôt: 04293015.6
(22) Date de dépôt: 16.12.2004
(51) Int. Cl.: B01D 53/14

(54) **Procédé de capture du dioxyde de carbone contenu dans des fumées**

(30) Priorité: 23.12.2003 FR 0315213
(71) Demandeur: Institut Français du Pétrole, 92852 Rueil-Malmaison Cedex (FR)
(72) Inventeur: Cadours, Renaud, 69340 Francheville (FR); Carrette, Pierre-Louis, 69002 Lyon (FR); Mougin, Pascal, 92500 Rueil Malmaison (FR); Broutin, Paul, 69630 Chaponost (FR); Boucot, Pierre, 69360 Ternay (FR)

(57) **Abrégé**

Les fumées arrivant par le conduit 1 sont mises en contact dans la colonne C1 avec un solvant, à faible tension de vapeur, absorbant le dioxyde de carbone. Le solvant chargé en dioxyde de carbone est régénéré par distillation dans la colonne C2. Pour améliorer la régénération, on injecte un gaz par le conduit 11 dans la colonne C2 afin que ce gaz entraîne le dioxyde de carbone contenu dans le solvant. L'effluent gazeux riche en dioxyde de carbone obtenu en tête de la colonne C2 peut être liquéfié par compression et refroidissement, puis stocké dans le réservoir tampon R, ce qui permet son transport et une éventuelle séquestration souterraine.

## Description

La présente invention concerne un procédé de capture du dioxyde de carbone contenu dans des fumées de combustion.

La pollution atmosphérique est un phénomène qui prend de l'importance, tant au niveau des sources d'émission des quantités des composés émis, qu'au niveau de l'impact de la pollution sur l'homme et son environnement. Le dioxyde de carbone (CO₂) est un des gaz à effet de serre largement produit par différentes activités de l'homme, notamment par la combustion d'hydrocarbures.
Afin de diminuer les quantités de dioxyde de carbone émises dans l'atmosphère, il est possible de capter le dioxyde de carbone contenu dans les fumées industrielles qui sont des sources fixes et importantes.
Il existe des procédés de captation du dioxyde de carbone par lavage des fumées avec un solvant. Les caractéristiques physico-chimiques des solvants employés sont étroitement liées à la nature des fumées: élimination sélective d'une impureté, stabilité thermique et chimique du solvant vis à vis des différents composés présents dans la fumée.

En général, la composition d'une fumée correspond, en volume, environ à 75 % d'azote, 15 % de dioxyde de carbone, 5% d'oxygène et 5 % d'eau. Différentes impuretés telles que des oxydes de soufre (SOx), des oxydes d'azote (NOx), de l'argon (Ar) et d'autres particules sont aussi présentes en quantités moindres, elles représentent en général moins de 2 % en volume. La température de ces fumées avant traitement est comprise entre 50°C et 180°C, la pression est quant à elle généralement inférieure à 2 MPa.

Le traitement des fumées impose des contraintes spécifiques au solvant : une sélectivité vis à vis du dioxyde de carbone par rapport à l'oxygène et à l'azote notamment, une stabilité thermique, une stabilité chimique notamment face aux impuretés de la fumée, à savoir l'oxygène, les SOx et les NOx, et une faible tension de vapeur, afin de limiter les pertes en solvant en tête de la colonne de décarbonatation.

Les solvants les plus utilisés aujourd'hui sont les solutions aqueuses d'alcanolamines, primaire, secondaire ou tertiaire. En effet, le CO₂ absorbé réagit avec l'alcanolamine présente en solution, selon une réaction exothermique. La vitesse de la réaction, son exothermicité, la stabilité des produits de la réaction, et le caractère corrosif de la solution décroissent avec l'augmentation du niveau de substitution de l'atome d'azote de la molécule. Les alcanolamines tertiaires seront de préférence utilisées pour minimiser les problèmes de corrosion et de perte de solvant par dégradation chimique. Elles présentent par contre le problème d'une capacité limitée, mais aussi d'une association chimique avec le CO₂ lente devant les phénomènes de transfert de matière, ce qui implique une attention particulière quant au dimensionnement des absorbeurs. Les alcanolamines secondaires, et principalement les alcanolamines primaires seront donc préférées, en dépit des risques plus élevés de corrosion et de dégradation chimique du solvant. A titre d'exemple, on peut citer la monoéthanolamine (MEA) qui, par sa forte capacité d'absorption, permet de dépasser 90% d'élimination dans le domaine des faibles pressions partielles en CO₂ caractéristiques des fumées. Le principal inconvénient de ces solvants à base d'alcanolamine réside dans leur instabilité chimique, en partie vis à vis du CO₂, mais surtout vis à vis des SOx et de l'oxygène. En effet, les alcanolamines réagissent irréversiblement avec l'oxygène. Les produits de ces réactions sont des acides carboxyliques pouvant être à l'origine de phénomènes de corrosion. Par ailleurs, la régénération de ces solvants aqueux à base d'alcanolamine exige un apport énergétique conséquent, correspondant en partie à la chaleur de réaction entre l'alcanolamine et le dioxyde de carbone, environ 30 % de l'énergie totale de régénération, et à la production d'une quantité de vapeur permettant de réaliser la régénération du solvant par entraînement par un gaz, couramment appelé « stripping » (70%).

Une alternative aux solutions aqueuses d'alcanolamine est les solutions chaudes de carbonates. Le principe est basé sur l'absorption du CO₂ dans la solution aqueuse, suivie de la réaction chimique avec les carbonates. Il est connu que l'ajout d'additifs permet d'optimiser l'efficacité du solvant. Ces additifs sont la plupart du temps des amines primaires ou secondaires, telle que la diéthanolamine (DEA). L'utilisation de tels additifs dans le cas du traitement des fumées doit être remise en cause en raison de leur instabilité, notamment vis à vis de l'oxygène.

D'autres procédés de décarbonatation par solvant sont basés sur une absorption physique du CO₂. Dans les solutions aqueuses d'alcanolamine ou de carbonate, la sélectivité du solvant, notamment vis à vis de l'azote est assurée par la réaction chimique. Dans le cas des solvants réalisant une absorption physique, tels que par exemple le méthanol réfrigéré ou les polyéthylèneglycols, on constate généralement une co-absorption non négligeable de l'azote parallèlement à l'absorption du CO₂. En effet, la grande proportion d'azote dans la fumée à traiter, comparée à la quantité de CO₂, implique une différence de force motrice entre les deux gaz que doit compenser la sélectivité du solvant. Cette co-absorption d'azote s'avère la plupart du temps pénalisante.

L'utilisation de liquides ioniques comme proposé par le document US 6,579,343 permettrait d'assurer une sélectivité entre le CO₂ et l'azote. L'intérêt de ces solvants est aussi leur faible tension de vapeur et leur stabilité thermique. Il faut aussi préciser que ces composés sont en général hydrophiles, et que, dans le cas des fumées citées ci-dessus, en supposant que les liquides ioniques résistent à l'oxygène, aux SOx et aux NOx, une déshydratation partielle des fumées serait étroitement liée à la décarbonatation. La quantité d'eau éliminée lors du traitement de la fumée sera liée à la teneur en eau du solvant issu de l'étape de régénération.

Quelle que soit la nature du solvant, physique et/ou chimique, un aspect primordial de ces opérations de traitement par solvant est la régénération de l'agent de séparation. Dans le cas des solvants réalisant une absorption physique, une régénération par détente est souvent proposée. Toutefois, s'agissant de fumées à basse pression, ce mode de régénération ne permet pas d'atteindre une pureté du solvant suffisante pour atteindre l'efficacité voulue dans la phase de décarbonatation. Une régénération classique par distillation devra donc être mise en oeuvre, quelle que soit la nature du solvant. L'efficacité de cette opération réside dans la création d'un flux de vapeur par évaporation d'une quantité de solvant dans le bouilleur de la colonne de distillation. L'inconvénient est cependant l'énergie nécessaire à cette vaporisation, énergie qui peut atteindre 70 % de la consommation énergétique de l'étape de régénération. Dans le cadre des solutions aqueuses d'alcanolamine ou de carbonate, ou dans le cas des solvants physiques tels que le méthanol ou des mélanges de polyéthèneglycol et d'eau, l'effet de « stripping » par vapeur est facilement réalisé par évaporation d'une quantité du solvant, au prix cependant d'une forte consommation énergétique. Dans le cas d'un solvant à très faible tension de vapeur, tel qu'un liquide ionique, cet effet de « stripping » est généralement difficile à réaliser. Les liquides ioniques tels que ceux décrits dans le document US 6,579,343 par leur caractère hydrophile, présenteront une teneur en eau dépendant de la déshydratation réalisée simultanément à la décarbonatation du gaz. Lors de l'étape de régénération par distillation, les quantités d'eau libérées par le solvant ionique seront insuffisantes pour assurer cet effet de « stripping ». Il s'en suivra une régénération seulement partielle du solvant vis à vis du CO₂ et l'efficacité de la décarbonatation ne pourra pas être obtenue.

Ainsi, la présente invention propose un procédé de capture du dioxyde de carbone présent dans des fumées de combustion avant une éventuelle séquestration du dioxyde de carbone capté.

De manière générale, l'invention concerne un procédé de capture du dioxyde de carbone présent dans les fumées de combustion, dans lequel on effectue les étapes suivantes :
a) on met en contact les fumées avec un solvant absorbant le dioxyde de carbone, de manière à obtenir des fumées appauvries en dioxyde de carbone et un solvant chargé en dioxyde de carbone, et
b) on régénère le solvant chargé en dioxyde de carbone par distillation dans une colonne, un gaz étant injecté dans la colonne, de manière à obtenir un solvant régénéré et un effluent gazeux comportant du dioxyde de carbone, le débit volumique dudit gaz étant inférieur à 10 % du débit volumique des fumées à traiter à l'étape a).
   En outre, on peut effectuer les étapes suivantes :
c) on liquéfie l'effluent gazeux obtenu à l'étape b), et
d) on stocke le liquide obtenu à l'étape c) dans un réservoir.

Selon l'invention, à l'étape c), on peut comprimer et refroidir l'effluent gazeux.

Selon l'invention, avant l'étape b), on peut détendre le solvant chargé en dioxyde de carbone de manière à libérer une partie du dioxyde de carbone. Une partie du solvant détendu peut être mise en contact avec les fumées à l'étape a). A l'étape c), on peut liquéfier l'effluent gazeux obtenu à l'étape b) et la partie du dioxyde de carbone libérée par détente du solvant.
Alternativement, selon l'invention, avant l'étape b), on peut comprimer le solvant chargé en dioxyde de carbone
Selon l'invention, on peut recycler le solvant régénéré à l'étape a), en tant que solvant absorbant le dioxyde de carbone.
Le solvant peut avoir une tension de vapeur inférieure à 0,1 MPa absolu à 100°C. Par exemple, le solvant comporte au moins l'un des composés suivants : un glycol, un éther de glycol, un alcool, du sulfolane, de la N-méthylpyrrolidone, du carbonate de propylène, un liquide ionique, une amine, une alcanolamine, un acide aminé, une amide, une urée, un phosphate, un carbonate et un borate de métal alcalin.
Le gaz peut comporter moins de 15 % en volume de dioxyde de carbone. Par exemple, le gaz est choisi dans la liste des gaz suivants : une partie des fumées prélevée avant l'étape a), une partie des fumées appauvrie en dioxyde de carbone obtenues à l'étape a), du gaz naturel, de l'air.

Selon l'invention, l'étape a) peut être réalisée sous une pression comprise entre 0,1 et 10 MPa absolu, et à une température comprise entre 0°C et 80°C, et l'étape b) peut être réalisée sous une pression comprise entre 0,01 et 0,2 MPa absolu.

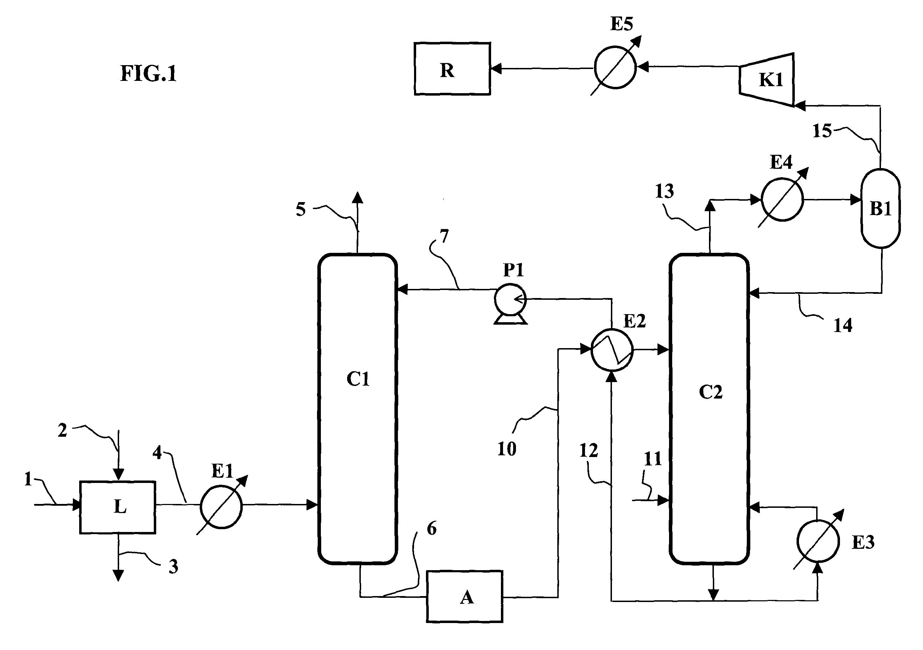

D'autres caractéristiques et avantages de l'invention seront mieux compris et apparaîtront clairement à la lecture de la description faite ci-après en se référant à la figure 1 qui représente schématiquement le procédé selon l'invention.

En référence à la figure 1, des fumées à traiter arrivent par le conduit 1. Par exemple, les fumées peuvent être produites par la combustion d'hydrocarbures dans une chaudière ou pour une turbine à gaz de combustion. Ces fumées peuvent comporter entre 50 % à 80 % d'azote, entre 5 % à 20 % de dioxyde de carbone (CO₂), entre 2 % à 10 % d'oxygène (O₂), plus diverses impuretés telles que des SOx, des NOx, des poussières ou autres particules. Les fumées peuvent être disponibles à une pression comprise entre 0,1 MPa abs et 10 MPa abs et préférentiellement comprises entre 0,1 MPa abs et 2 MPa abs, et à une température comprise entre 40°C et 500°C et préférentiellement entre 40°C et 180°C.

Les fumées circulant dans le conduit 1 peuvent subir un pré-traitement dans la zone L pour éliminer les poussières et une parties des impuretés gazeuses telles que les SOx et les NOx. Le pré-traitement peut comporter une étape de lavage à l'eau des fumées : les fumées sont mises en contact avec de l'eau arrivant par le conduit 2, par exemple dans une tour de Quench. Les fumées peuvent circuler à contre courant de l'eau. Le lavage à l'eau permet, d'une part, d'éliminer les poussières et, d'autre part, de refroidir les fumées, par exemple jusqu'à une température comprise entre 0°C et 80°C. L'eau chargée en impuretés et chauffée par les fumées est évacuée par le conduit 3. Le refroidissement permet de favoriser l'absorption du dioxyde de carbone par le solvant dans la colonne C1. Le pré-traitement peut également comporter d'autres étapes qui permettent plus spécifiquement de capter les SOx et les NOx en amont du lavage à l'eau.
Les fumées évacuées de la zone L par le conduit 4 peuvent subir un refroidissement complémentaire dans l'échangeur de chaleur E1. Ensuite les fumées sont introduites dans la colonne de mise en contact C1.

Dans la colonne C1, les fumées sont mises en contact avec un solvant de décarbonatation arrivant par le conduit 7.
Le solvant de décarbonatation est choisi pour ses aptitudes à absorber le dioxyde de carbone. Ce solvant peut être une solution d'absorption formée au moins d'un ou plusieurs composés organiques et/ou d'un ou plusieurs composés ayant la capacité de réagir de façon réversible avec le CO₂. Le ou les composés réagissant avec le CO₂ peuvent aussi être des fonctions greffées sur le ou les composés organiques. Le solvant utilisé peut contenir de l'eau. Les composés organiques peuvent être, par exemple, des glycols, des éthers de glycols, des alcools, du sulfolane, de la N-méthylpyrrolidone, du carbonate de propylène ou des liquides ioniques. Les composés réactifs peuvent être par exemple et de façon non limitative des amines (primaires, secondaires, tertiaires, cycliques ou non, aromatiques ou non), des alcanolamines, des acides aminés, des amides, des urées, des phosphates, des carbonates ou des borates de métaux alcalins. Le solvant peut contenir en outre des additifs anticorrosion et/ou antimousse. La tension de vapeur du solvant à 100°C peut être inférieure à 0,1 MPa abs, de préférence inférieure à 0,05 MPa abs et plus préférentiellement inférieure à 0,02 MPa abs.
La mise en contact avec le solvant de décarbonatation peut être réalisée de façon classique dans une ou plusieurs colonnes de contact à co-courrant ou à contre-courrant. Les colonnes peuvent être garnies de plateaux, perforés, à clapets, ou à calottes. Les colonnes peuvent également être de type à garnissage en vrac ou structuré. Il est également possible d'utiliser des contacteurs membranaires afin d'optimiser le contact entre le gaz et le liquide.
Dans la colonne C1, le solvant capte et absorbe le dioxyde de carbone contenu dans les fumées. Le solvant absorbe au moins 50 %, de préférence au moins 80 % ou 90 % du CO₂ contenu dans les fumées arrivant par le conduit 1. Le solvant peut également co-absorber d'autres composés contenus dans les fumées tel l'azote (N₂), l'oxygène (O₂), des SOx et des NOx. Les quantités co-absorbées dépendent de la nature du solvant, mais sont en général inférieures à 50 %, et de préférence moins de 5 %, des composés captés par le solvant. Les fumées appauvries en dioxyde de carbone sont évacuées de la colonne C1 par le conduit 5. Le solvant chargé en dioxyde de carbone est évacué par le conduit 6.

Le solvant chargé en dioxyde de carbone est introduit dans dispositif A qui permet de modifier la pression du solvant. La pression du solvant peut être ajustée à une valeur comprise entre 0,01 et 1 MPa abs, de préférence entre 0,01 et 0,2 MPa abs. Le solvant obtenu en sortie du dispositif A est évacué par le conduit 10.
Les fumées issues d'une chaudière sont en général disponibles à une pression proche de la pression atmosphérique. Dans ce cas, le dispositif A peut être une pompe pour élever la pression du solvant.
Les fumées provenant d'une turbine à gaz sont en général disponibles à une pression supérieure à 0,5 MPa. Dans ce cas, le dispositif A peut être une vanne et/ou une turbine de détente. Lors de la détente, une partie du dioxyde de carbone absorbée par le solvant et, éventuellement, une partie des impuretés, sont libérées sous forme d'un effluent gazeux. Cet effluent peut être mélangé à d'autres effluents riches en dioxyde de carbone en vue d'une liquéfaction et d'un stockage. Le solvant obtenu après détente est partiellement régénéré, c'est à dire qu'il est appauvri en dioxyde de carbone. Une partie du solvant partiellement régénéré peut être introduite dans la colonne C1.
Alternativement, le dispositif A peut ne pas exister et le solvant circulant dans le conduit 6 peut directement être transféré dans le conduit 10.

Le solvant circulant dans le conduit 10 est chauffé dans l'échangeur de chaleur E2, puis est introduit dans la colonne C2 pour être régénéré, c'est à dire pour séparer le solvant du dioxyde de carbone. Dans la colonne C2, on effectue une distillation du solvant pour obtenir, en fond de la colonne C2, un solvant liquide régénéré appauvri en dioxyde de carbone et, en tête de la colonne C2, un effluent gazeux contenant du dioxyde de carbone. Le rebouilleur E3 disposé en fond de la colonne C2 apporte la chaleur nécessaire pour effectuer la distillation. La distillation peut être effectuée sous une pression proche de la pression atmosphérique, par exemple entre 0,01 et 0,2 MPa abs. La température de distillation est choisie en fonction du solvant qui est mis en oeuvre. En général, la température en fond de la colonne C2 peut varier entre 100°C et 200°C, en fonction du solvant et de la pression dans la colonne C2.
La régénération peut être réalisée de façon classique dans une ou plusieurs colonnes qui peuvent être garnies de plateaux perforées, à clapets, ou à calottes. Ces colonnes peuvent également être de type à garnissage en vrac ou structuré.
Pour améliorer la régénération, on introduit par le conduit 11 en fond de la colonne C2 un gaz qui assure un effet couramment appelé « stripping » ou « strippage », c'est à dire que le gaz entraîne en phase vapeur le dioxyde de carbone contenu dans le solvant à régénérer. Le débit volumique du gaz peut être inférieur à 10 %, de préférence inférieur à 5 % et avantageusement inférieur à 3 % du débit des fumées à traiter arrivant par le conduit 1. En général, le débit de gaz est supérieur à 0,5 % du débit des fumées à traiter.
L'association de la montée en température du solvant dans la colonne C2, accompagnée de l'effet de « stripping » du gaz injecté par le conduit 11 dans la colonne C2, permet de réaliser la régénération du solvant. L'injection du gaz en fond de la colonne C2 concourt au bon fonctionnement de la colonne C2 en assurant un débit de gaz suffisant sur les différents plateaux de la colonne C2. Ainsi, l'effet de « stripping » s'applique particulièrement bien à la régénération de solvants à faible tension de vapeur, inférieure à 0,1 MPa abs à 100°C.

Le gaz introduit par le conduit 11 dans la colonne C2 peut être une partie des fumées arrivant par le conduit 1, une partie des fumées circulant dans le conduit 4 et/ou une partie des fumées traitées circulant dans le conduit 5. Ce gaz peut également être un gaz inerte avec le dioxyde de carbone et qui contient, en volume, moins de 15% de dioxyde de carbone, par exemple du gaz naturel ou, de l'air. La teneur en dioxyde de carbone du gaz introduit dans C2 par le conduit 11 implique une limitation thermodynamique à la régénération du solvant. Cette limite peut être déplacée en augmentant la température sous laquelle est effectuée la régénération.
Le solvant régénéré obtenu en fond de la colonne C2 est évacué par le conduit 12, refroidi dans l'échangeur de chaleur E2, pompé par la pompe P1, puis introduit par le conduit 7 dans la colonne C1.
L'effluent gazeux obtenu en tête de la colonne C2 est évacué par le conduit 13, partiellement liquéfié par l'échangeur de chaleur E4 à une température par exemple comprise entre 30°C et 60°C, puis introduit dans le ballon B1. Le liquide obtenu en fond du ballon B1 est introduit en tête de la colonne C2 par le conduit 14 à titre de reflux. La fraction gazeuse évacuée en tête du ballon B1 par le conduit 15 comporte le dioxyde de carbone retiré des fumées à traiter arrivant par le conduit 1. La teneur en dioxyde de carbone de cette fraction gazeuse dépend du débit de gaz de « stripping » introduit par le conduit 11 dans la colonne C2. L'utilisation d'un faible débit de gaz, de préférence inférieure à 10 % du débit des fumées à traiter, permet d'obtenir en tête de C2 un effluent gazeux très riche en CO₂. La fraction gazeuse évacuée par le conduit 15 est composée d'au moins 50 %, de préférence plus de 85 %, et idéalement plus de 95 % de dioxyde de carbone. Ainsi, cette fraction gazeuse peut être directement liquéfiée et stockée, sans procéder à un traitement complémentaire.
Par ailleurs, l'utilisation d'un faible débit de gaz de « stripping » ne permet pas de réaliser une régénération poussée du solvant dans la colonne C2. Cependant, ceci n'est pas un inconvénient pour le procédé selon l'invention car le pouvoir d'absorption du solvant dans la colonne C1 n'a pas besoin d'être optimal. En effet, la décarbonatation des fumées en vue de séquestrer le CO₂ n'impose pas des spécifications sévères quant à la teneur en CO₂ dans les fumées traitées.

Dans une optique de liquéfaction du dioxyde de carbone en vue de son transport et d'une séquestration, la fraction gazeuse circulant dans le conduit 15, éventuellement mélangée avec l'effluent gazeux libérés lors de la détente dans le dispositif A, peut être liquéfiée par compression effectuée par le compresseur K1 et par refroidissement dans l'échangeur de chaleur E5. La liquéfaction peut également être réalisée par une succession d'étapes de compression, éventuellement de pompage, et de refroidissement. Le refroidissement permet de maintenir la température entre 10°C et 60°C, de préférence entre 20°C et 35°C, afin d'assurer la condensation de l'effluent riche en dioxyde de carbone. Cet effluent liquide peut être stocké provisoirement dans le réservoir R. Ensuite, l'effluent riche en CO₂ peut être séquestré dans un réservoir souterrain. L'effluent liquide peut subir une distillation pour réaliser une séparation entre l'azote et le dioxyde de carbone, mais il est également possible de séquestrer la totalité de l'azote avec le dioxyde de carbone.

Le procédé selon l'invention décrit en référence avec la figure 1 est illustré par les exemples numériques suivants.
Les fumées à traiter arrivent par le conduit 1 à un débit de 585 000 Nm³/h et possèdent la composition volumique donnée dans le tableau ci-après :

| CO₂ | N₂ | O₂ | Ar | CO₂ |
|---|---|---|---|---|
| 4,81% | 175,23% % | 15,73% % | 10,96% % | 13,27 % |

Ces fumées ont subi un traitement préalable pour réduire les teneurs en SOx et NOx respectivement à moins de 20 ppmv et 10 ppmv. Ce pré-traitement permet d'enlever ces impuretés qui peuvent dégrader l'alcanolamine employée comme solvant d'absorption.
La mise en contact avec de l'eau dans une tour de lavage L permet d'éliminer les poussières résiduelles et de refroidir les fumées à 40 °C avant d'entrée dans la colonne d'absorption C1.
Pour chacun des deux cas décrits ci-après, la colonne C2 fonctionne sous 0,11 MPa abs, les fumées sont injectées à 40 °C en fond de C2 et le solvant est injecté à 45 °C en tête de C2. Dans les deux cas, on considère un taux de capture du dioxyde de carbone de 90 %, ce qui permet de récupérer 137,2 t/h de dioxyde de carbone en tête de la colonne de régénération C2.

### Cas 1

Le solvant utilisé est une solution aqueuse contenant 30 % poids de MEA (monoéthanolamine). Pour capter 90 % du CO₂, on injecte un débit de solution aqueuse de 2400 m³/h en entrée de C1. La régénération de cette solution obtenue en fond de C1 est réalisée par distillation, à une pression de 0,17 MPa abs en tête de la colonne C2. Les températures en fond et en tête de la colonne C2 sont respectivement de 122°C et 40°C pour permettre la régénération du solvant.
En prenant en compte l'échange thermique dans l'échangeur E2 entre les solutions riche et pauvre en dioxyde de carbone, on apporte par le rebouilleur E3 de la colonne C2 une quantité de chaleur s'élevant à 120 Gcal/h.

### Cas 2

Le solvant utilisé est une solution de tétraéthylène glycol diméthyl éther contenant 30 % poids de MEA (monoéthanolamine). Pour capter 90 % du CO₂, on injecte un débit de solvant de 2600 m³/h en entrée de C1. La régénération de cette solution obtenue en fond de C1 est réalisée par distillation, à une pression de 0,17 MPa abs en tête de la colonne C2. Pour favoriser la régénération du solvant, on introduit en fond de la colonne de régénération C2, 1 % du débit de fumées décarbonatées obtenu en tête de la colonne C1, ce flux de fumées permettant de « stripper » le dioxyde de carbone contenu dans le solvant. Les températures en fond et en tête de la colonne C2 sont alors respectivement de 125°C et 40°C pour permettre la régénération du solvant. En prenant en compte les échanges thermiques, d'une part, entre la solution riche en dioxyde de carbone et les fumées de « stripping » dans C2 et, d'autre part, entre les solutions riche et pauvre en dioxyde de carbone dans l'échangeur de chaleur E2, il est nécessaire d'apporter par le rebouilleur E3 de la colonne C2 une quantité de chaleur s'élevant à 88 Gcal/h.

Dans le cas 2, le « stripping » avec un flux de fumées décarbonatées rend possible la régénération du solvant même si la solution n'est pas aqueuse mais est un mélange d'alcanolamine dans un co-solvant à faible tension de vapeur. L'effet de « stripping » que l'on avait précédemment dans le cas 1 avec la vaporisation de l'eau est obtenu dans le cas 2 par l'injection d'un gaz inerte, en l'occurrence le flux de fumées décarbonatées, dans la colonne de régénération C2. On note par ailleurs, une réduction de 27 % de la chaleur de rebouillage nécessaire à la régénération du solvant pour obtenir la même production de dioxyde de carbone en tête du régénérateur. Cette réduction de la chaleur de rebouillage s'explique par l'absence, dans le cas 2, de vaporisation du solvant.

## Revendications

1. Procédé de capture du dioxyde de carbone présent dans les fumées de combustion, dans lequel on effectue les étapes suivantes :
a) on met en contact les fumées avec un solvant absorbant le dioxyde de carbone, de manière à obtenir des fumées appauvries en dioxyde de carbone et un solvant chargé en dioxyde de carbone, et
b) on régénère le solvant chargé en dioxyde de carbone par distillation dans une colonne (C2), un gaz étant injecté dans la colonne, de manière à obtenir un solvant régénéré et un effluent gazeux comportant du dioxyde de carbone, le débit volumique dudit gaz étant inférieur à 10 % du débit volumique des fumées à traiter à l'étape a).

2. Procédé selon la revendication 1, dans lequel on effectue, en outre, les étapes suivantes :
c) on liquéfie l'effluent gazeux obtenu à l'étape b), et
d) on stocke le liquide obtenu à l'étape c) dans un réservoir (R).

3. Procédé selon la revendication 2, dans lequel à l'étape c) on comprime et on refroidit l'effluent gazeux.

4. Procédé selon l'une des revendications 1 à 3, dans lequel avant l'étape b), on détend le solvant chargé en dioxyde de carbone de manière à libérer une partie du dioxyde de carbone.

5. Procédé selon la revendication 4, dans lequel une partie du solvant détendu est mise en contact avec les fumées à l'étape a).

6. Procédé selon l'une des revendications 4 et 5, dans lequel à l'étape c), on liquéfie l'effluent gazeux obtenu à l'étape b) et la partie du dioxyde de carbone libérée par détente du solvant.

7. Procédé selon l'une des revendications 1 à 3, dans lequel avant l'étape b), on comprime le solvant chargé en dioxyde de carbone

8. Procédé selon l'une des revendications 1 à 7, dans lequel on recycle le solvant régénéré à l'étape a), en tant que solvant absorbant le dioxyde de carbone.

9. Procédé selon l'une des revendications 1 à 8, dans lequel le solvant a une tension de vapeur inférieure à 0,1 MPa absolu à 100°C.

10. Procédé selon la revendication 9, dans lequel le solvant comporte au moins l'un des composés suivants : un glycol, un éther de glycol, un alcool, du sulfolane, de la N-méthylpyrrolidone, du carbonate de propylène, un liquide ionique, une amine, une alcanolamine, un acide aminé, une amide, une urée, un phosphate, un carbonate et un borate de métal alcalin.

11. Procédé selon l'une des revendications 1 à 10, dans lequel ledit gaz comporte moins de 15 % en volume de dioxyde de carbone.

12. Procédé selon la revendication 11, dans lequel le gaz est choisi dans la liste des gaz suivants : une partie des fumées prélevée avant l'étape a), une partie des fumées appauvrie en dioxyde de carbone obtenues à l'étape a), du gaz naturel, de l'air.

13. Procédé selon l'une des revendications 1 à 12, dans lequel
- l'étape a) est réalisée sous une pression comprise entre 0,1 et 10 MPa absolu, et à une température comprise entre 0°C et 80°C,
- l'étape b) est réalisée sous une pression comprise entre 0,01 et 0,2 MPa absolu.
